Europäisches Patentamt

(19) European Patent Office

Office européen des brevets

(11) Veröffentlichungsnummer: **0 067 298**
**B1**

(12) # EUROPÄISCHE PATENTSCHRIFT

(45) Veröffentlichungstag der Patentschrift:
10.07.85

(21) Anmeldenummer: 82103747.0

(22) Anmeldetag: 03.05.82

(51) Int. Cl.⁴: **H 01 F 7/16, G 12 B 7/00,**
**G 05 D 23/20**

(54) **Elektrisch betätigter Hubmagnet mit Hublageerkennung.**

(30) Priorität: **13.06.81 DE 3123525**

(43) Veröffentlichungstag der Anmeldung:
**22.12.82 Patentblatt 82/51**

(45) Bekanntmachung des Hinweises auf die Patenterteilung:
**10.07.85 Patentblatt 85/28**

(84) Benannte Vertragsstaaten:
**CH FR GB IT LI**

(56) Entgegenhaltungen:
**DE - A - 2 930 995**
**FR - A - 2 292 368**
**GB - A - 2 049 294**
**US - A - 3 831 042**
**US - A - 4 266 556**

**RADIO FERNSEHEN ELEKTRONIK, Band 28, Nr. 11,**
**November 1979, Berlin, DE. M. KÜHNE: "Einsatz des**
**integrierten Spannungsreglers MAA 723 in**
**proportionalen Temperaturregelschaltungen"**

(73) Patentinhaber: **Binder Magnete GmbH, Mönchweiler**
**Strasse 1, D-7730 VS-Villingen (DE)**

(72) Erfinder: **Muckle, Norbert, Ing. grad., Fohrenweg 1/1,**
**D-7731 Unterkirnach (DE)**

(74) Vertreter: **Patentanwälte Dipl.-Ing. Klaus Westphal Dr.**
**rer. nat. Bernd Mussgnug Dr. rer.nat. Otto Buchner,**
**Waldstrasse 33, D-7730 VS-Villingen (DE)**

## Beschreibung

Die Erfindung betrifft einen elektrisch betätigten Hubmagneten mit Hublageerkennung gemäß Oberbegriff des Patentanspruchs 1.

Ein Hubmagnet dieser Gattung ist aus der DE-A-2 930 995 bekannt. Solche Hubmagnete werden z. B. zur Betätigung von Ventilen eingesetzt, wobei der Ventilkörper über eine Stange mit dem Anker des Hubmagneten verbunden ist. Zur Regelung der Ventilstellung wird die Hublage des Ankers als Ist-Wert bestimmt und mit einem vorgegebenen Soll-Wert verglichen, und der der Arbeitswicklung des Hubmagneten zugeführte Betätigungsstrom wird entsprechend der so ermittelten Regelabweichung gesteuert.

Die Hublageerkennung zur Ermittlung des Ist-Wertes besteht bei diesem bekannten Hubmagneten in einer Meßspule, die axial anschließend an die Arbeitswicklung auf dem weichmagnetischen Ankerführungsteil im Bereich einer unmagnetischen Trennfuge angeordnet ist, die von dem einen Ende des Ankers bei dessen Axialbewegung überstrichen wird. Die Induktivität der Meßspule ändert sich je nach dem, wie weit die Trennfuge durch den Anker überbrückt wird. Die Meßspule wird mit einer Wechselspannung gespeist und ihr induktiver Widerstand zur Hublageerkennung bestimmt.

Zu dem induktiven Widerstand der Meßspule kommt deren temperaturabhängiger ohmscher Widerstand hinzu. Da sich die Temperatur der Meßspule, insbesondere durch die unterschiedliche Stromstärke der Arbeitswicklung und durch Umwelteinflüsse ändert, ändert sich auch ihr ohmscher Widerstand, was zur Verfälschung des ermittelten Hublage-Ist-Wertes führt.

Bei dem bekannten Hubmagneten ist zur Kompensation des Temperaturganges eine zweite Meßspule vorgesehen, die in wärmeleitendem Kontakt mit der ersten Meßspule steht, deren Induktivität aber nicht durch die Hublage des Ankers beeinflußt wird. Die Änderung des induktiven Widerstandes der ersten Meßspule wird durch Vergleich mit dem Widerstand der zweiten Meßspule ermittelt, so daß der für beide Meßspulen gleiche temperaturabhängige ohmsche Widerstand ohne Einfluß ist.

Die zweite Meßspule erhöht bei der bekannten Hublageerkennung die Kosten und den Platzbedarf.

Der Erfindung liegt die Aufgabe zugrunde, die Kompensation des Temperaturganges der Meßspule mit geringerem Aufwand und Platzbedarf zu bewirken.

Diese Aufgabe wird bei einem Hubmagneten der eingangs genannten Gattung erfindungsgemäß gelöst durch die Merkmale des kennzeichnenden Teils des Patentanspruchs 1.

Vorteilhafte Ausführungsformen und Weiterbildungen der Erfindung sind in den Unteransprüchen angegeben.

Durch den an der Meßspule angeordneten Temperaturfühler wird die jeweilige momentane Temperatur der Meßspule festgestellt. Die die Meßspule speisende Wechselspannung wird entsprechend dieser momentanen Temperatur variiert, so daß gerade der dieser momentanen Temperatur entsprechende ohmsche Widerstand der Meßspule kompensiert wird. Die Temperaturkompensation wird durch eine einfache, wenig aufwendige elektronische Schaltung bewirkt. An der Meßspule selbst muß nur der Temperaturfühler angeordnet sein, während die übrige elektronische Schaltung nicht in den Hubmagneten integriert werden muß. Die für den Einbau wesentlichen Abmessungen des Hubmagneten werden daher durch die Temperaturkompensation nicht beeinflußt.

Als Temperaturfühler kann prinzipiell jedes elektronische Bauelement mit einer temperaturabhängigen Kennlinie verwendet werden; z. B. ein Thermoelement oder ein temperaturabhängiger Widerstand. Vorzugsweise werden als Temperaturfühler Dioden verwendet, die mit einem konstanten Strom gespeist werden. Der Spannungsabfall über diese Dioden ist dann direkt proportional der Temperatur. Dadurch läßt sich in einfacher Weise die die Meßspule speisende Wechselspannung proportional der Temperatur variieren, um den proportional mit der Temperatur ansteigenden ohmschen Widerstand der Meßspule zu kompensieren.

Um eine eventuelle ungleichmäßige Temperaturverteilung innerhalb der Meßspule zu berücksichtigen, sind vorzugsweise mehrere Temperaturfühler über den Umfang der Meßspule verteilt. Vorzugsweise werden vier in Reihe geschaltete Dioden um die Meßspule herum angeordnet.

Im folgenden wird die Erfindung anhand eines in der Zeichnung dargestellten Ausführungsbeispiels näher erläutert. Es zeigt

Fig. 1 einen in der oberen Hälfte axial geschnittenen Hubmagneten,

Fig. 2 in einem Blockschaltbild die gesamte Hublagenregelung des Hubmagneten,

Fig. 3 ein Schaltbild der Temperaturkompensation der Meßspule des Hubmagneten und

Fig. 4 in einem Diagramm die Temperaturkompensation.

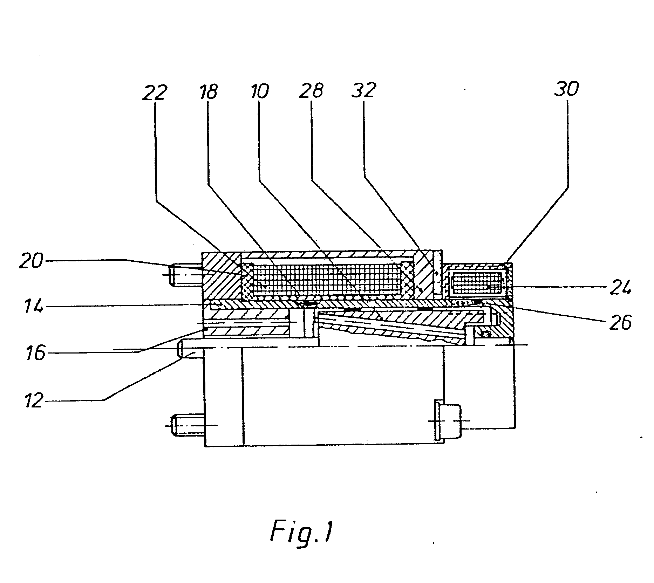

Der in Fig. 1 dargestellte Hubmagnet weist einen weichmagnetischen Anker 10 auf, mit dem eine unmagnetische Kolbenstange 12 verbunden ist. Die Kolbenstange wirkt gegen eine Federkraft auf ein nicht dargestelltes Stellglied, beispielsweise einen Ventilkörper, ein. Der Anker 10 wird in einem als Druckrohr ausgebildeten weichmagnetischen Ankerführungsteil 14 axial verschiebbar geführt. Die Hubbewegung des Ankers 10 wird einerseits durch das geschlossene Ende des Ankerführungsteils 14 und andererseits durch einen in diesen Ankerführungsteil eingesetzten Anschlag 16 begrenzt. Eine erste unmagnetische Trennfuge 18 unterbricht den Ankerführungsteil 14 im Bereich des dem Anschlag 16 zugewandten Endes des Hubweges des Ankers 10.

Auf dem Ankerführungsteil 14 sitzt ein Spulenkörper 20, auf welchen eine Arbeitswicklung 22 gewickelt ist. Ein weichmagnetisches Magnetfluß-Rückschlußteil 28 schließt den Magnetkreis des Ankerführungsteils 14 außen um die Arbeitswicklung 22.

Der Hubmagnet kann mit einer Flanschplatte mittels Befestigungsschrauben unmittelbar an einem hydraulischen System angebaut werden. Bohrungen in dem Anschlag 16 und dem Anker 10 ermöglichen den Eintritt des unter Druck stehenden Hydraulikfluids auf beide Seiten des Ankers 10.

Ein axial vorspringender Ansatz des Ankers 10 mit einer für die Führung des Magnetflusses ausreichenden radialen Dicke ragt über den Magnetfluß-Rückschlußteil 28 axial hinaus. Ebenso ist der Ankerführungsteil 14 über den Magnetfluß-Rückschlußteil 28 hinaus axial verlängert.

Auf der axialen Verlängerung des Ankerführungsteils 14 sitzt eine Meßspule 24. Der Ankerführungsteil 14 weist im Bereich der Meßspule 24 eine zweite unmagnetische Trennfuge 26 auf. Ein Magnetfluß-Rückschlußteil 30 schließt den Magnetkreis der Meßspule 24. Der Magnetfluß-Rückschlußteil 30 ist an seiner der Arbeitswicklung 22 zugewandten Stirnfläche durch einen mit einer radialen Kunststoffscheibe 32 ausgefüllten Spalt von dem Magnetfluß-Rückschlußteil 28 der Arbeitswicklung 22 getrennt. Dadurch wird ein Übergreifen des Magnetflusses der Arbeitswicklung 22 auf den Magnetfluß der Meßspule 24 vermieden.

Der induktive Widerstand der Meßspule 24 ist veränderlich und hängt davon ab, wie weit die zweite unmagnetische Trennfuge 26 durch den Anker 10 überbrückt wird, und somit von der durch die Arbeitswicklung 22 speisenden Stromstärke abhängige Hublage des Ankers 10.

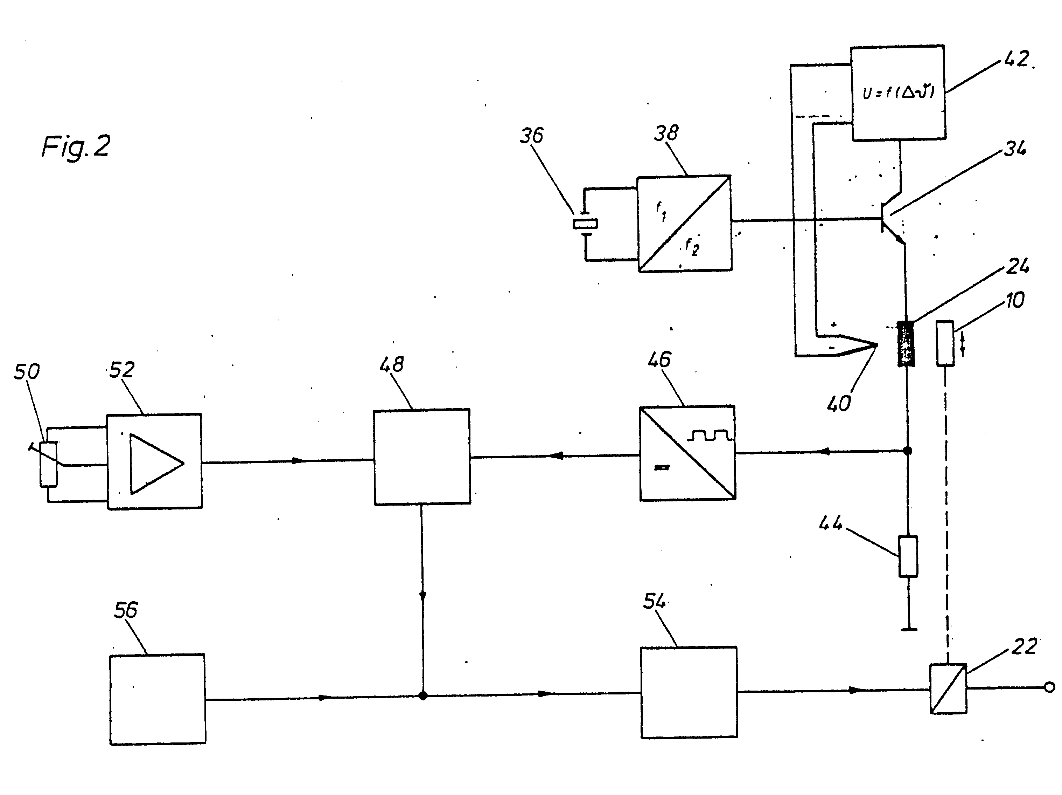

Anhand des Blockschaltbildes der Fig. 2 wird die Regelung der Hublage des Hubmagneten erläutert.

Im Blockschaltbild der Fig. 2 sind die Arbeitswicklung 22, der Anker 10 und die Meßspule 24 des Hubmagneten schematisch dargestellt. Die Meßspule 24 wird mit einer Wechselspannung $U_2$ gespeist, die aus einer Gleichspannung U mittels eines Transistors 34 erzeugt wird, der durch einen Quarzoszillator 36 mit nachgeschaltetem Frequenzumformer 38 auf- und zugesteuert wird. Die Gleichspannung U wird zur Kompensation des temperaturabhängigen ohmschen Widerstandes der Meßspule 24 entsprechend der durch einen an der Meßspule 24 angeordneten Temperaturfühler 40 ermittelten Temperatur $\vartheta$ variiert. Die in Fig. 2 schematisch angedeutete Temperaturkompensationsschaltung 42 wird später im einzelnen erläutert.

Die Meßspule 24 ist mit einem ohmschen Meßwiderstand 44 in Reihe geschaltet. Der durch die Meßspule 24 fließende Wechselstrom ist von dem induktiven Widerstand der Meßspule 24, d. h. von der Hublage des Ankers 10, abhängig. Der entsprechend diesem hublageabhängigen Wechselstrom an dem Meßwiderstand 44 auftretende Spannungsabfall wird über einen Präzisionsgleichrichter 46 gleichgerichtet und einem Eingang eines Regelverstärkers 48 mit P-I-Verhalten zugeführt. Dem anderen Eingang des Regelverstärkers 48 wird der Soll-Wert der Ankerhublage als Gleichspannungssignal zugeführt. Dieser Soll-Wert wird durch ein Potentiometer 50 und einen Verstärker 52 eingegeben.

Der Regelverstärker 48 vergleicht nun das den Ist-Wert der Hublage darstellende Ausgangssignal des Präzisionsgleichrichters 46 mit dem den Soll-Wert darstellenden Ausgangssignal des Verstärkers 52 und regelt entsprechend der Regelabweichung über einen Schaltregler 54 den der Arbeitswicklung 22 zugeführten Strom, so daß die Regelabweichung null wird und der Anker die eingegebene Soll-Hublage einnimmt. Dem der Arbeitswicklung 22 zugeführten Strom wird zusätzlich durch einen Dither 56 eine Zitterfrequenz überlagert, um ein Festsetzen des Ankers bzw. des durch diesen betätigten Stellgliedes zu verhindern.

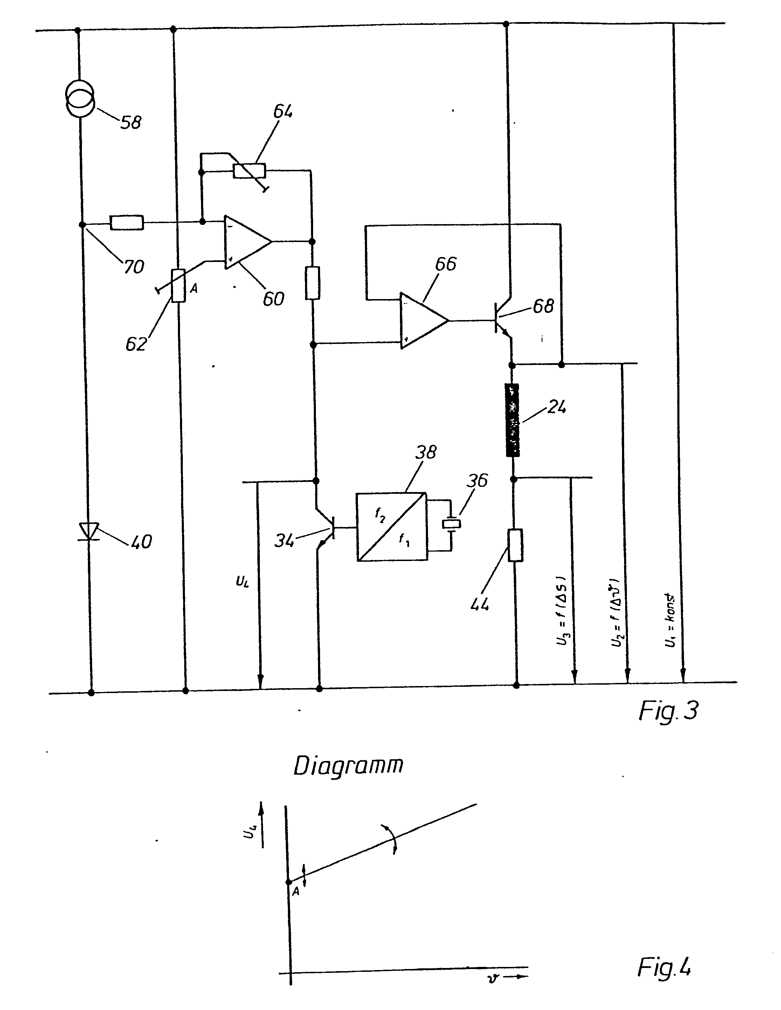

Aus Fig. 3 geht die Temperaturkompensationsschaltung 42 im einzelnen hervor. Der Temperaturfühler 40 wird durch eine Diode gebildet, die an eine Konstantstromquelle 58 angeschlossen ist. Anstelle der in Fig. 3 dargestellten einen Diode 40 werden in der Praxis vorzugsweise vier in Reihe geschaltete Dioden verwendet, die über den Umfang der Meßspule 24 verteilt angeordnet sind.

Der der Temperatur der Diode 40 bzw. der Meßspule 24 direkt proportionale Spannungsabfall über die Diode 40 wird dem einen Eingang eines Differenz-Operationsverstärkers 60 zugeführt. Dem anderen Eingang des Differenz-Operationsverstärkers 60 wird über ein Potentiometer 62 eine einstellbare Gleichspannung zugeführt. Der Gegenkopplungswiderstand 64 des Operationsverstärkers 60 ist ebenfalls einstellbar veränderlich. Die Gleichspannung am Ausgang des Differenz-Operationsverstärkers 60 wird durch den bereits oben erwähnten quarzgesteuerten Transistor 34 in eine Wechselspannung $U_4$ mit einer Frequenz von beispielsweise 200 Hz umgewandelt. Diese in der Amplitude von der Temperatur der Diode 40 bzw. der Meßspule 24 abhängige Wechselspannung $U_4$ wird über einen Operationsverstärker 66 und einen Transistor 68, die zur Impedanzwandlung dienen, in die gleichgroße temperaturabhängige Wechselspannung $U_2$ umgewandelt, die die Meßspule 24 speist.

Anhand der Fig. 4 wird die Einstellung der Temperaturkompensation erläutert.

Da der ohmsche Widerstand der Meßspule 24 proportional mit der Temperatur ansteigt, muß auch die Spannung $U_4$ bzw. die mit dieser gleiche Spannung $U_2$ proportional mit der Temperatur ansteigen. Dieser in Fig. 4 dargestellte lineare Anstieg der Spannung $U_4$ mit der Temperatur ergibt sich aus dem temperaturproportionalen Spannungsabfall an der Diode 40 und der linearen Verstärkung des Differenz-Operationsverstärkers 60.

Um eine vollständige Kompensation des temperaturabhängigen ohmschen Widerstandes der Meßspule 24 zu erhalten, wird zunächst empirisch ermittelt, welche Spannungen $U_4$ bei einer sehr tiefen und bei einer sehr hohen Temperatur der Meßspule 24 notwendig sind, um die gleiche, nur von der Hublage S des Ankers 10 abhängige Ist-Wert-Spannung $U_3$ zu erhalten. Die Konstantstromquelle 58 und die Diode 40 werden dann durch eine variable Spannungsquelle ersetzt und zunächst an dem Punkt 70 (in Fig. 3) die Spannung eingespeist, die dem Spannungsabfall der Diode 40 bei dieser tiefen Temperatur entspricht. Mittels des Potentiometers 62 wird dann die Spannung $U_4$ auf den empirisch ermittelten Wert für diese tiefe Temperatur eingestellt, d. h. es wird der Punkt A in Fig. 4 festgelegt.

Anschließend wird an dem Punkt 70 die Spannung eingespeist, die dem Spannungsabfall der Diode 40 bei der hohen Temperatur entspricht. Mittels des einstellbaren Gegenkopplungswiderstandes 64 wird nun die Verstärkung des Operationsverstärkers 60, d. h. die Steigung der in Fig. 4 dargestellten linearen Abhängigkeit der Spannung $U_4$ von der Temperatur $\vartheta$ so eingestellt, daß die für diese hohe Temperatur empirisch ermittelte Spannung $U_4$ erhalten wird. Aufgrund der linearen Abhängigkeit ist damit eine Temperaturkompensation über den gesamten Temperaturbereich erreicht.

## Patentansprüche

1. Elektrisch betätigter Hubmagnet mit Hublageerkennung mit einer Arbeitswicklung (22), mit einem innerhalb der Arbeitswicklung angeordneten, diese an einem Ende axial überragenden, weichmagnetischen Ankerführungsteil (14), in dem ein Anker (10) verschiebbar angeordnet ist, mit einer außerhalb der Arbeitswicklung (22) in dem Ankerführungsteil (14), vorgesehenen unmagnetischen Trennfuge (26), mit einer die Trennfuge umgebenden Meßspule (24), die mit einer Wechselspannung gespeist ist und deren von der Hublage des Ankers abhängiger induktiver Widerstand bestimmt wird, und mit einer Einrichtung zur Kompensation der Temperaturabhängigkeit des ohmschen Widerstands der Meßspule, gekennzeichnet durch einen in wärmeleitenden Kontakt mit der Meßspule (24) angeordneten Temperaturfühler (40) und durch eine Kompensationsschaltung (42), welche die die Meßspule (24) speisende Wechselspannung ($U_2$) entsprechend der durch den Temperaturfühler (14) ermittelten Temperatur variiert.

2. Hubmagnet nach Anspruch 1, dadurch gekennzeichnet, daß eine oder mehrere Dioden als Temperaturfühler (40) dienen.

3. Hubmagnet nach Anspruch 2, dadurch gekennzeichnet, daß mehrere in Reihe geschaltete Dioden über den Umfang der Meßspule (24) verteilt angeordnet sind.

4. Hubmagnet nach Anspruch 2 oder 3, dadurch gekennzeichnet, daß die Diode/Dioden (40) an eine Konstantstromquelle (58) angeschlossen sind und daß die über der Diode/den Dioden anliegende Gleichspannung mittels eines durch einen Frequenzgenerator (36, 38) gesteuerten elektronischen Schalters in die die Meßspule (24) speisende Wechselspannung ($U_2$) umgewandelt wird.

5. Hubmagnet nach Anspruch 4, dadurch gekennzeichnet, daß der elektronische Schalter ein Transistor (34) ist.

6. Hubmagnet nach Anspruch 4 oder 5, dadurch gekennzeichnet, daß die über der Diode/den Dioden (40) anliegende Gleichspannung durch einen Operationsverstärker (60) verstärkt wird.

7. Hubmagnet nach Anspruch 6, dadurch gekennzeichnet, daß der Operationsverstärker (60) als Differenzverstärker ausgebildet ist, an dessen einem Eingang die über der Diode/den Dioden (40) anliegende Gleichspannung und an dessen anderem Eingang eine mittels eines Potentiometers (62) einstellbare Gleichspannung anliegt.

8. Hubmagnet nach Anspruch 6 und 7, dadurch gekennzeichnet, daß die Verstärkung des Operationsverstärkers (60) mittels eines veränderlichen Gegenkopplungswiderstandes (64) einstellbar ist.

## Claims

1. An electrically actuated solenoid magnet with a travel position detection, comprising a load winding (22), a soft magnetic armature guide part which projects axially past the load winding at one end, in which guide part an armature (10) is displaceably arranged, a nonmagnetic isolating joint (26) provided in the armature guide part (14) outside the load winding (22), a sensing coil (24) which surrounds the isolating joint and which is fed by an alternating voltage and whose inductive impedance is determined as a function of the travel position of the armature, and a device for compensating for the temperature dependence of the resistive impedance of the measuring coil, characterised by a temperature sensor (40) arranged in heat-conductive contact with the sensing coil (24) and a compensating circuit (42) which varies the alternating voltage ($U_2$), which feeds the sensing coil (24), in accordance with the temperature determined by the temperature sensor (14).

2. A solenoid magnet according to claim 1, characterised in that one or more diodes are used astemperature sensors (40).

3. A solenoid magnet according to claim 2, characterised in that several series-connected diodes are arranged distributed over the circumference of the sensing coil (24).

4. A solenoid magnet according to claim 2 or 3, characterised in that the diode/diodes (40) are connected to a constant-current source (58) and that the direct voltage applied via the diode/diodes is converted by means of an electronic switch controlled by a frequency generator (36, 38) into the alternating voltage (U₂) which feeds the sensing coil (24).

5. A solenoid magnet according to claim 4, characterised in that the electronic switch is a transistor (34).

6. A solenoid magnet according to claim 4 or 5, characterised in that the direct voltage applied via the diode/diodes (40) is amplified by an operational amplifier (60).

7. A solenoid magnet according to claim 6, characterised in that the amplifier (60) is constructed to operate as a differential amplifier at the one input of which the direct voltage applied by the diode/diodes (40) is present and at the other input of which a direct voltage is present which can be adjusted by means of a potentiometer (62).

8. A solenoid magnet according to claim 6 and 7, characterised in that the gain of the operational amplifier (60) can be adjusted by means of a variable feedback resistor (64).

**Revendications**

1. Electro-aimant de soulèvement à commande électrique avec reconnaissance de la position de déplacement, comportant un enroulement de travail (22), une pièce de guidage d'induit (14), à aimantation douce, dépassant axialement une extrémité de l'enroulement de travail à l'intérieur de celui-ci, pièce à l'intérieur de laquelle est monté de façon coulissante un induit (10), ayant un joint (26), amagnétique, prévu à l'extérieur de l'enroulement de travail (22) dans la pièce de guidage d'induit (14), avec une bobine de mesure (24) entourant le joint, bobine qui est alimentée par une tension alternative et dont l'inductance est déterminée en fonction de la position du soulèvement de l'induit et une installation pour compenser la dépendance de la résistance ohmique de la bobine de mesure en fonction de la température, caractérisé par un capteur de température (40) en contact thermique avec la bobine de mesure (24) et par un circuit de compensation (42) qui modifie la tension alternative (U₂) alimentant la bobine de mesure (24) en fonction de la température déterminée par le capteur de température (14).

2. Electro-aimant de soulèvement selon la revendication 1, caractérisé par une ou plusieurs diodes fonctionnant comme capteurs de température (40).

3. Electro-aimant de soulèvement selon la revendication 2, caractérisé par plusieurs diodes branchées en série, et réparties à la périphérie de la bobine de mesure (24).

4. Electro-aimant de soulèvement selon la revendication 2 ou 3, caractérisé en ce que la ou les diodes (40) sont branchées sur une source de courant constant (58) et en ce que la tension continue est appliquée par la ou les diodes et est convertie par l'intermédiaire d'un commutateur électronique commandé par un générateur de fréquence (36, 38) en une tension alternative (U₂) qui alimente la bobine de mesure (24).

5. Electro-aimant selon la revendication 4, caractérisé en ce que le commutateur électronique est un transistor (34).

6. Electro-aimant de soulèvement selon l'une des revendications 4 ou 5, caractérisé en ce que la tension continue appliquée par la ou les diodes (40) est amplifiée par un amplificateur opérationnel (60).

7. Electro-aimant de soulèvement selon la revendication 6, caractérisé en ce que l'amplificateur opérationnel (60) est réalisé sous forme d'amplificateur différentiel dont une entrée reçoit la tension continue appliquée par la ou les diodes (40) et dont l'autre entrée reçoit une tension cotinue réglable par l'intermédiaire d'un potentiomètre (62).

8. Electro-aimant de soulèvement selon les revendications 6 et 7, caractérisé en ce que l'amplification de l'amplificateur opérationnel (60) est réglable à l'aide d'une résistance de contre-réaction (64) variable.

Fig.1

Fig.2

$U = f(\Delta \vartheta)$

0 067 298

Fig. 3

Diagramm

Fig. 4